# EUROPEAN PATENT SPECIFICATION

(11) **EP 0 802 159 B1**
(45) Date of publication and mention of the grant of the patent: **07.03.2001**
(21) Application number: 97105990.2
(22) Date of filing: 11.04.1997
(51) Int. Cl.: C01B 17/22, H01M 6/18

(54) **Method of manufacturing lithium sulfide**
Verfahren zur Herstellung von Lithiumsulfid
Procédé pour la préparation de sulfure de lithium

(30) Priority: 16.04.1996 JP 9439796
(43) Date of publication of application: 22.10.1997
(73) Proprietor: FURUKAWA CO., LTD., Tokyo 100-8370 (JP)
(72) Inventor: Yamamoto, Kazutomi, 3-3-33 Asahigaoka, Hino-shi, Tokyo (JP); Ikeda, Nobuhiko, 3-3-33 Asahigaoka, Hino-shi, Tokyo (JP)
(74) Representative: Sparing - Röhl - Henseler Patentanwälte

(56) References cited:
- US-A- 3 615 191
- US-A- 3 642 436
- US-A- 4 126 666
- PATENT ABSTRACTS OF JAPAN vol. 096, no. 004, 30 April 1996 & JP 07 330312 A (IDEMITSU PETROCHEM CO LTD), 19 December 1995,
- CHEMICAL ABSTRACTS, vol. 61, no. 4, 17 August 1964 Columbus, Ohio, US; abstract no. 3965c, INSTYTUT CHEMII NIEORGANICZNEJ: "Preparation of sodium sulfide." column l; XP002033983 & PL 47 951 A 30 December 1963

## Description

This invention relates to a method of manufacturing lithium sulfide which is used for solid electrolyte of a battery, lubricant, or other chemical materials.

Lithium sulfide is not yielded as a natural mineral due to its deliquescent property. Some methods for synthesizing lithium sulfide have been known as follows:
(1) to reduce lithium sulfate with organic substance, such as cane sugar and starch,in the inert or reducing atmosphere, or under vacuum,
(2) to reduce lithium sulfate with carbon black or graphite powder in the inert or reducing atmosphere, or under vacuum,
(3) to react directly lithium metal with hydrogen sulfide or sulfur vapor.

In the above mentioned case of (3), hydrogen sulfide starts to decompose at 400°C and its decomposition completes at 1700°C. So, reaction of the case (3) is conjectured that lithium metal reacts with sulfur vapor originated by the decomposition of hydrogen sulfide .

Accordingly, it is considered that the main reaction of the above mentioned case (1) between lithium sulfate and organic substance, such as cane sugar and starch, is solid phase reaction, it is important that lithium sulfate and organic substance, such as cane sugar and starch, are mixed up until the mixture will be homogeneous. In consequence, there is a problem that lithium sulfate is not reduced thoroughly, if the component distributed unevenly in the mixture. In the case that organic substance,such as cane sugar and starch, is added more excessive than the stoichometric demand in order to reduce lithium sulfate thoroughly, there is a problem that free carbon should remain too much.

Because it is also conjectured that the main reaction of the above mentioned case (2) between lithium sulfate and carbon black or graphite powder is solid phase reaction, it is important that lithium sulfate and carbon black or graphite powder are mixed up uniformly. Lithium sulfate is water-soluble and hydrophilic. Carbon black or graphite powder is lipophilic. So, lithium sulfate and carbon are tendency toward distribute unevenly. In consequence, this method also has a problem like the case (1) that lithium sulfate is not reduced thoroughly or free carbon remains.

In the case of (3) mentioned above, the velocity of reaction between metallic lithium and hydrogen sulfide can not be controlled, because this reaction will proceed vigorously on account of its exothermic reaction. On the other hand, at low temperature this reaction hardly proceeds, or if proceeded, the reaction proceeds only on the surface of metallic lithium. Using a very thin foil of metallic lithium, it is possible to react almost 100 % of lithium. But this method costs highly in order to thin metallic lithium to foil in a non-oxidizing condition.

According to CHEMICAL ABSTRACTS, AN: 124:264936 (& JP-A-7330312), fo manufacturing lithium sulfide lithium hydroxide is dissolved in an aprotic organic solvent and the lithium sulfide is synthesized by blowing hydrogen sulfide thereinto.

According to CHEMICAL ABSTRACTS, AN:61:3965c (& PL-A-47951) solid sodiun hydroxide and hydrogen sulfide are synthesized at 180 to 200°C to sodium sulfide ii introducing hydrogen sulfide into a column containing solid sodium hydroxide. Under these conditions a layer of sodium sulfide is formed on the surface of sodium hydroxide, flows down and may be reduced by water vapor.

According to the invention, the method of manufacturing lithium sulfide consists ii reacting solid particles of lithium hydroxide with a source of gaseous sulfur at a reacting temperature in the range of 130 to 445°C.

As a source of gaseous sulfur, hydrogen sulfide or a mixture of hydrogen and vaporized sulfur, can be used.

Preferably, the lithium hydroxide used in this method is 0.1 to 1.5 mm in particle size.

Concerning the temperature range, from 300 to 400°C is preferred because of the better achievement of the reaction. When the temperature is below 130°C, there are som problems that dehydration of lithium hydroxide is not enough, it takes a long time fc dehydration, or the rate of purposive sulfide reaction is very slow.

When the temperature is above 445°C, lithium hydroxide is melted and then makes a aggregate easily. So, there are some problems that lithium sulfide having high purity can not be obtained, it takes long time for this reaction, and the higher temperature is needed in order to react thoroughly.

The reaction between lithium hydroxide and a source of gaseous sulfur is one of solid and gas. There are some options in order to promote the reaction of lithium hydroxide and gaseous sulfur. The options are high temperature, high pressure, large surface area of lithium hydroxide and exclusion of the product from the reacting zone. The manner of giving large surface area is realized by making a granule size small. It is effective to carry moisture away, generated as a result of this sulfide reaction, out of the reacting zone by gas.

When small granules are used in large flowrate of gaseous sulfur, small granules should be carried away by gaseous sulfur with moisture. Then the small granule causes not only to make a loss of raw material, but also a difficulty for the treatment of exhaust gas. Therefore, the minimum granule size of lithium hydroxide is restricted in order not to be carried away by gaseous sulfur.

It is important to react the solid with the gas uniformly. Fluidization and mechanical agitation has been known as the means of implementing uniform reaction. Though the use of small granules is more convenient to fluidization by fluid stream and mechanical agitation, there is a problem that the small granules are carried easily away by the fluid stream. On the contrary, in the case of using large granules, there are some problems that fluidization of large granules require the large flow rate of gas, or agitation for large granules is more difficult.

As the above result, it is desirable that the diameter of granule size of lithium hydroxide is in the range of 0.1 to 1.5 mm. It is more desirable to be in the range of 0.7 to 1.2 mm.

Because lithium hydroxide usually includes water adsorbed and/or water of crystallization, the operation of dehydration and/or drying is needed absolutely before lithium hydroxide is reacted with the source of gaseous sulfur. Without this operation, the reaction is not proceeded because lithium hydroxide forms an aggregate.

In the operation of dehydration and/or drying, it is necessary to control the evolving quantity of water desorbed and reacted per minute and to flow enough gas to carry water away out of the reacting zone. The quantity of evolving water per minute is controlled by heating speed. A rapid heating is undesirable because the water cannot be removed around lithium hydroxide sufficiently. Lithium hydroxide makes an aggregate easily in the presence of moisture. The termination of dehydration is determined by measuring dew point of exhaust gas.

Dehydration of lithium hydroxide by dehydrating agent such as diphosphorus pentaoxide, is not suitable to industrial purposes owing to its slow rate of dehydration.

A source of gaseous sulfur is hydrogen sulfide or the mixture of hydrogen and vaporized sulfur. Hydrogen sulfide is appropriate with regard to handling. In point of recycling gaseous sulfur, the mixture of hydrogen and vaporized sulfur is suitable. However,the selection of gaseous sulfur depends on the location of plant, the treatment of exhaust gas, the easiness of supply and so on.

### EXAMPLE 1

A hard glass tube, having 15 mm for its internal diameter and 200 mm for its length, was prepared. A stainless plate, having many holes which were 0.5 mm in diameter, was fixed at the middle of the glass tube. The weight (shown at Table 1) of lithium hydroxide, having granule size in the range of 0.7 to 1.2 mm, was added onto the stainless plate. The water caused by dehydration and desorption was removed from lithium hydroxide layer by keeping the temperature at 250 °C for 30 minutes and flowing 1000 ml/min of argon gas after the temperature was raised at the heating speed of 500 °C per hour by external heating. After it was confirmed that the dew point of exhaust gas was -30°C, argon gas was changed to hydrogen sulfide in order to synthesize lithium sulfide. The flow rate of hydrogen sulfide is shown at Table 1. The reaction time is also shown at Table 1.

The colors of products were light-yellowish or ivory white powder. The yielding percentage of these reactions depended on the ratio of hydrogen sulfide to lithium hydroxide. When the ratio of hydrogen sulfide to lithium hydroxide was larger, the yielding percentage of this reaction was higher. According to X-ray diffraction, only lithium sulfide and lithium hydroxide were detected. The results are shown at Table 1.

### EXAMPLE 2

Example 1 was repeated except that the water was removed from 19 g of lithium hydroxide by keeping the temperature at 300°C for 30 minutes and flowing 1500 ml/min of nitrogen gas after the temperature was raised up to 300 °C at the heating speed 600 °C per hour and the time of the reaction with hydrogen sulfide was 12 minutes. The flow rate of hydrogen sulfide was 1250 ml/min.

The product was light-yellowish white powder. There was 100 % of lithium sulfide in the product.

### EXAMPLE 3

Example 1 was repeated except that the water was removed from 19 g of lithium hydroxide by keeping the temperature at 400°C for 30 minutes and flowing 1500 ml/min of nitrogen gas after the temperature was raised up to 400 °C at the heating speed of 600°C per hour and the time of the reaction with mixed gas of hydrogen and vaporized sulfur was 12 minutes. The mixed gas was prepared by flowing 750 ml/min of hydrogen over melting sulfur at 400 °C.

The product was light-yellowish white powder. There was 100% of lithium sulfide in the product.

### COMPARATIVE EXAMPLE 1

Example 1 was repeated except that the water was removed from 9 g of lithium hydroxide by keeping the temperature at 100 °C for 30 minutes and flowing argon gas after the temperature was raised up to 100°C at the heating speed of 600°C and the time of the reaction with hydrogen sulfide was 12 minutes. The flow rate of hydrogen sulfide was 250 ml/min.

The product was light-yellowish white powder. According to X-ray diffraction, lithium hydrosulfide, lithium hydroxide anhydrate and lithium hydroxide hydrate were detected, but lithium sulfide was not detected.

### COMPARATIVE EXAMPLE 2

Example 1 was repeated except that hydrogen oxide was removed from 9 g of lithium hydroxide by keeping the temperature at 450°C for 30 minutes and flowing argon gas after the temperature was raised up to 450°C at the heating speed of 600°C and the time of the reaction with hydrogen sulfide was 12 minutes. The flow rate of hydrogen sulfide was 1250 ml/min.

The product was light-yellowish white columnar aggregate. The inside color of this aggregate was white. The outside of this aggregate was lithium sulfide, but the inside was lithium hydrosulfide and lithium hydroxide. The content of lithium sulfide in the product was 40 %.

### EXAMPLE 4

Example 2 was repeated except that the granule size of lithium hydroxide was 0.05 mm. The product was light-yellowish white powder. Though the product was 100 % of lithium sulfide, the yielding quantity of the product was less the half weight of Example 2.

### EXAMPLE 5

Example 2 was repeated except that the granule size of lithium hydroxide was 2.0 mm. The product was light-yellowish white columnar aggregate. The inside color of this aggregate was white. The outside of this aggregate was lithium sulfide, but the inside was lithium hydrosulfide and lithium hydroxide. The content of lithium sulfide in the product was 60 %.

As described above, lithium sulfide is made from lithium hydroxide and gaseous sulfur, wherein selected lithium hydroxide is 0.1 to 1.5 mm in size and reacting temperature is in the range of 130 to 445°C. The reaction between lithium hydroxide and gaseous sulfur is one of a solid and a gas at low temperature, and lithium hydroxide is an inexpensive material, so that the reaction is easily controlled, erosion of the vessel used for the reaction is prevented, and lithium sulfide having high purity is manufactured at low cost.

For the gaseous sulfur, hydrogen sulfide is treatable, and sulfur vapor in the atomosphere of hydrogen is preferable for recycling sulfur.

**Table 1:**

| Content of lithium sulfide in the product | | | | |
|---|---|---|---|---|
| Flow rate of H₂S ml/min | Reaction time min | Charging amount of LiOH-H2O | | |
| | | 9 g | 14 g | 19 g |
| 250 | 60 | 68 % | 52 % | 23 % |
| 500 | 30 | 88 % | 71 % | 59 % |
| 1250 | 12 | 100 % | 94 % | 89 % |

## Claims

1. A method of manufacturing lithium sulfide by reacting solid particles of lithium hydroxide with a source of gaseous sulfur at a reacting temperature in the range of 130 to 445°C.

2. The method of claim 1, characterized in that the lithium hydroxide is 0.1 to 1.5 mm in particle size.

3. The method of claim 1 or 2 characterized in that the source of gaseous sulfur is hydrogen sulfide or a mixture of hydrogen and vaporized sulfur.

## Patentansprüche

1. Verfahren zur Herstellung von Lithiumsulfid durch Reaktion fester Lithiumhydroxidpartikel mit einer Quelle gasförmigen Schwefels bei einer Reaktionstemperatur im Bereich von 130 bis 445 °C.

2. Verfahren nach Anspruch 1, dadurch gekennzeichnet, daß das Lithiumhydroxid in einer Partikelgröße von 0,1 bis 1,5 mm vorliegt.

3. Verfahren nach Anspruch 1 oder 2, dadurch gekennzeichnet, daß die Quelle gasförmigen Schwefels Schwefelwasserstoff oder ein Gemisch aus Wasserstoff und verdampftem Schwefel ist.

## Revendications

1. Procédé d'obtention de sulfure de lithium par réaction de particules solides d'hydroxyde de lithium avec un source de soufre gazeux à une température de réaction dans la plage de 130 à 445°C.

2. Procédé de la revendication 1 caractérisé en ce que l'hydroxyde de lithium a une dimension de particule comprise entre 0,1 et 1,5 mm.

3. Procédé de la revendication 1 ou 2 caractérisé en ce que la source de soufre gazeux est du sulfure d'hydrogène ou un mélange d'hydrogène et de soufre vaporisé.
